# EUROPEAN PATENT APPLICATION

(11) **EP 4 834 747 A1**
(43) Date of publication of application: **04.11.2026**
(21) Application number: 26174437.9
(22) Date of filing: 24.04.2026
(51) Int. Cl.: B64C 1/06, B29C 70/20, B29D 99/00, B64C 3/18, B64C 3/20, B64C 1/00

(54) **AIRCRAFT STRUCTURAL COMPONENT AND METHOD OF FABRICATING AN AIRCRAFT STRUCTURAL COMPONENT**

(30) Priority: 29.04.2025 GB 202506515
(71) Applicant: Airbus Operations Limited, Bristol BS34 7PA (GB)
(72) Inventor: CONSENTINO, Enzo, Bristol, BS34 7PA (GB); BARNETT, Thomas, Bristol, BS34 7PA (GB)
(74) Representative: EIP

(57) **Abstract**

Disclosed is an aircraft structural component for an aircraft and a method of fabricating an aircraft structural component. The aircraft structural component comprises a web and a flange, the web extending from the flange in a first direction to a distal end, the distal end being distal from the flange, wherein the web comprises a plurality of layers, each layer having a plurality of fibres, wherein at least a first layer of the plurality of layers has a first portion of fibres orientated at a first angle relative to the first direction, and a second portion of fibres orientated at a second angle relative to the first direction, wherein the first portion of the layer is closer to the flange than the second portion of the layer and the second angle is greater than the first angle.

## Description

### TECHNICAL FIELD

The present invention relates to aircraft structural components, such as stringers, and to methods of fabricating aircraft structural components.

### BACKGROUND

Aircraft structural components, for example elongate aircraft structural components, such as stringers are used in aircraft to provide structural support and strength to elongate parts of the aircraft. For example, aircraft wing stringers used in aircraft wings and extend along their span. Stringers can also be found in an aircraft fuselage, where the stringers extend in the longitudinal direction of the fuselage.

### SUMMARY

According to a first aspect of the present invention, there is provided an aircraft structural component for an aircraft, the aircraft structural component comprising a web and a flange, the web extending from the flange in a first direction to a distal end, the distal end being distal from the flange, wherein the web comprises a plurality of layers, each layer having a plurality of fibres, wherein at least a first layer of the plurality of layers has a first portion of fibres orientated at a first angle relative to the first direction, and a second portion of fibres orientated at a second angle relative to the first direction, wherein the first portion of the layer is closer to the flange than the second portion of the layer and the second angle is greater than the first angle.

The angle of orientation of the fibres may determine the stiffness of the structural component. 'Stiffness' may refer to, for example, a degree of resistance to deformation under loading and/or bending. By providing a first portion of fibres having a first orientation and a second portion of fibres having a second orientation, the aircraft structural component may offer variable stiffness along the web. Varying the fibre orientations through the web, rather than using a uniform angle throughout, may help to maintain the strength of the structural component in multiple directions, thereby meeting structural requirements for multi-axial loading conditions.

By providing a second portion of fibres orientated at a greater angle relative to the first direction towards the distal end of the web, the aircraft structural component may have a lower stiffness in the second portion. This may enable the energy of an impact near the edge of the aircraft structural component to be more effectively dispersed throughout the structural component, potentially offering improved performance compared to, for example, an aircraft structural component having a higher stiffness towards the distal end of the web. This may reduce the likelihood of buckling of the fibres upon impact by, for example, a tool dropped from a height.

Composite materials can develop internal delamination due to impact damage during manufacture, assembly and/or transport, that may not be externally visible. Compression After Impact Edge (CAIE) testing, may be used to determine the required size of aircraft components. This process can involve impacting a representative sample of an aircraft component and assessing the remaining compressive strength of said sample in order to determine the required size of the aircraft structural component. By reducing the stiffness of fibres located in a second portion adjacent to the distal end of the web, the aircraft structural component may meet the CAIE testing requirements at a reduced weight compared to, for example, an aircraft structural component having fibres orientated in a single direction between the flange and the distal end of the web.

The second portion may be adjacent to the distal end of the web. The distal end of the web may form the edge of the aircraft structural component. The fibres in the second portion may be orientated at a greater angle relative to the first direction.

The first portion may be adjacent to the flange. The distance between the flange and the distal end of the web may be the height of the web.

The fibres may be continuous fibres orientated parallel to one another. By arranging the fibres parallel to one another they may provide strength in a direction along the length of the flange, and therefore along the length of the aircraft structural component.

The aircraft structural component may comprise a transition between the first and second portions, the transition being located at a distance from the distal end equal to between five to ten times, inclusive, of a thickness of the web. This arrangement has been found to incorporate an area of the web effected by an impact from, for example, a tool dropped from a height or a collision during manufacture, assembly and/or transport. The transition between the first and second portions may be located at a distance from the distal end equal to between two to five times, inclusive, of a thickness of the web.

The web may have a thickness of 5mm to 25mm.

The transition may comprise a portion of the web in which the fibres are curved. By providing curved fibres, there may be no requirement to overlap fibres having varying orientation, this may provide a reduced weight of the aircraft structural component compared to, for example, an arrangement in which the first portion overlies the second portion.

The curved portion of the transition may have a radius of curvature between the first portion of the fibres and the second portion of the fibres of between 2mm and 100mm. This arrangement has been found suitable for manufacturing methods and provides the desired variation in orientation of the fibres extending from the flange to the distal end of the web.

The first portion may comprise a first group of fibres orientated parallel to one another, and the second portion may comprise a second group of fibres orientated parallel to one another. The first portion may comprise a plurality of groups, each group having fibres orientated parallel to one another, the second portion may comprise a plurality of groups, each group having fibres orientated parallel to one another.

The first group of fibres may terminate, and the second group of fibres may begin within the transition. This may provide a relatively simple arrangement for varying the orientation of the fibres without the need for complex manufacturing processes.

The transition may comprise an incremental step change between the first angle and the second angle. This may provide a gradual variation in orientation of the fibres and consequently, a progressive change in stiffness. The fibres may be arranged in groups, with each group having an incremental change in orientation between the preceding and subsequent groups.

The incremental step change in angle between the first portion of the fibres and the second portion is between 5 and 45 degrees. Each group may have an incremental change in orientation between the preceding and subsequent groups of 5 degrees. This arrangement may provide a reduced risk of buckling compared to an arrangement in which the incremental step change is greater than 45 degrees and may be simpler to manufacture than an arrangement having an incremental step change smaller than 5 degrees.

The arrangement of multiple fibre groups with different orientations may enable designers to tailor the mechanical properties of the stringer to address varying load conditions that may be encountered in different regions of the aircraft structure. For example, the stiffness at the edge of the web may be reduced compared to the stiffness at the portion of the web adjacent to the flange.

The first portion of fibres may be orientated at an angle of approximately 0 degrees relative to the first direction and the second portion of fibres may be orientated at an angle of approximately 45 degrees. Fibres angled at approximately 0 degrees relative to the first direction may act as stiffening columns in the web. The first direction may be equivalent to a height of the web.

The first portion of fibres may be orientated at an angle of approximately 45 degrees relative to the first direction and the second portion of fibres may be orientated at an angle of approximately 75 degrees. Such an arrangement has been found to provide the desired strength to the aircraft structural component.

The fibre composite material may comprise pre-impregnated (also known as 'pre-preg') fibres or 'dry' fibres. Dry fibres may be infused with a matrix material, such as a resin material.

The fibres may comprise, or consist of, carbon fibres. Carbon fibres may have superior properties to other types of fibres that may be used in composite layers, such as for example glass fibres. The superior properties may include, for example, greater strength and greater strength-to-weight ratio. This may be especially beneficial in aerospace applications where high strength and low weight of structural components are beneficial for performance and efficiency.

The web may comprise a total number of fibres, and wherein at least eight percent of the total number of fibres are orientated in each of four directions, the four directions being: first and second mutually perpendicular directions lying in a plane, and third and fourth mutually perpendicular directions lying in the plane and orientated at 45 degrees to the first and second directions.

The aircraft structural component may be a stringer. The aircraft stringer may be used as an element to which a skin section of a wing or a fuselage is to be attached for structural support. Aircraft stringers may have different cross-sectional shapes, such as a T-shape, an L-shape or an Ω-shape, for example.

A second aspect of the present invention provides an aircraft structural assembly, comprising the aircraft structural component according to the first aspect, and a skin section affixed to the flange of the aircraft structural component.

This may be achieved by, for example, affixing the flange of the aircraft structural component, at a face of the flange opposite to a face where the flange extends from the web, to the skin section. Affixing the flange may be achieved by mechanical fasteners, such as bolts or rivets, or using a welding process (if the flange is of a weldable material) or an adhesive process or any other suitable method. The aircraft structural assembly may, for example, be a wing and/or a fuselage for the aircraft.

A third aspect of the present invention provides an aircraft comprising the aircraft structural assembly according to the second aspect.

A fourth aspect of the present invention provides method of fabricating an aircraft structural component for an aircraft, the method comprising: providing a flange; and providing a web extending from the flange in a first direction to a distal end, the distal end being distal from the flange, wherein the web comprises a plurality of layers, each layer having a plurality of fibres, wherein at least a first layer of the plurality of layers has a first portion of fibres orientated at a first angle relative to the first direction, and a second portion of fibres orientated at a second angle relative to the first direction, wherein the first portion of the layer is closer to the flange than the second portion of the layer and the second angle is greater than the first angle.

The method permits fabrication of the aircraft structural component according to the first aspect of the present invention.

The method may comprise using rapid tow shearing technology to direct the orientation of the fibres. Rapid tow shearing may provide a cost-effective method of varying the orientation of the fibres in each layer of the web. Rapid tow shearing technology may enable the design of the orientation of the fibre to a specific configuration depending on the desired structural properties of the aircraft component.

The method may comprise using rapid tow steering technology to direct the orientation of the fibres.

The method may comprise infusing the layers with a resin.

Further features and advantages of the invention will become apparent from the following description of preferred embodiments of the invention, given by way of example only, which is made with reference to the accompanying drawings.

### BRIEF DESCRIPTION OF THE DRAWINGS

Embodiments of the invention will now be described, by way of example only, with reference to the accompanying drawings, in which:
Figure 1 shows a schematic view of an aircraft according to an example embodiment of the present invention.
Figure 2 shows an aircraft structural assembly according to an example embodiment of the present invention.
Figures 3A to 3C show, respectively, a side view of an aircraft structural component according to an example embodiment of the present invention, a cross-sectional view of the same, and a top-down view of the same.
Figure 4 shows a side view of an aircraft structural component according to an example embodiment of the present invention.
Figure 5 shows a side view of an aircraft structural component according to an example embodiment of the present invention.
Figure 6 shows a side view of an aircraft structural component according to an example embodiment of the present invention.
Figure 7 shows a side view of an aircraft structural component according to an example embodiment of the present invention.
Figure 8 shows a side view of an aircraft structural component according to an example embodiment of the present invention.
Figure 9 shows a side view of an aircraft structural component according to an example embodiment of the present invention.
Figures 10A to 10C show, respectively, a continuous fibre composite layer, a chopped-strand composite layer, and an example of a composite layup.

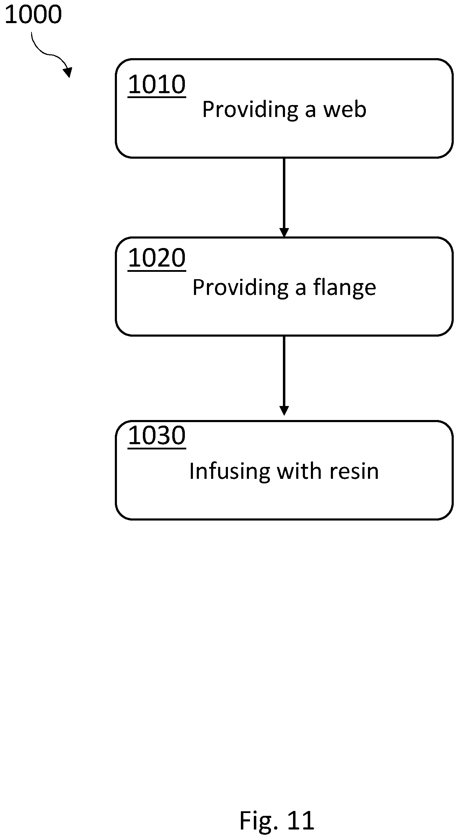

Figure 11 shows an example method of fabricating an aircraft structural component, according to an example embodiment of the present invention.

### DETAILED DESCRIPTION

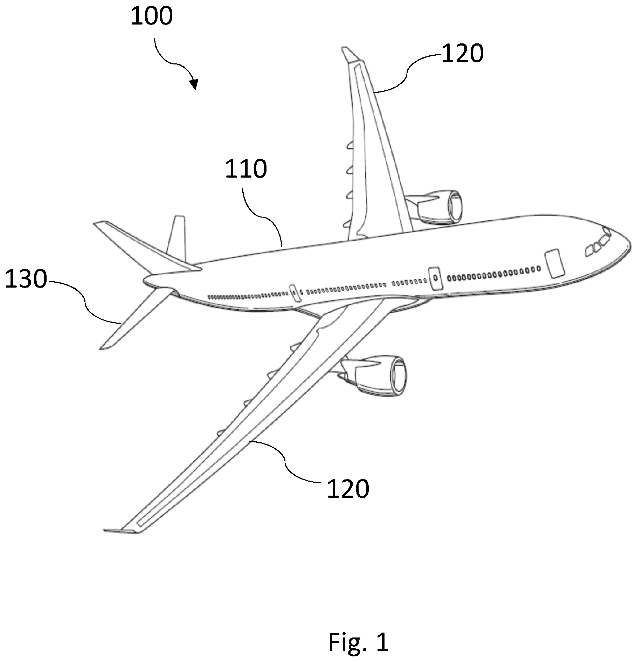

Figure 1 shows an aircraft 100 according to an example of the invention, comprising one or more structural assemblies including aircraft structural components (not shown in Figure 1), as described below. Such assemblies are included in the fuselage 110, the wings 120, and the tail 130.

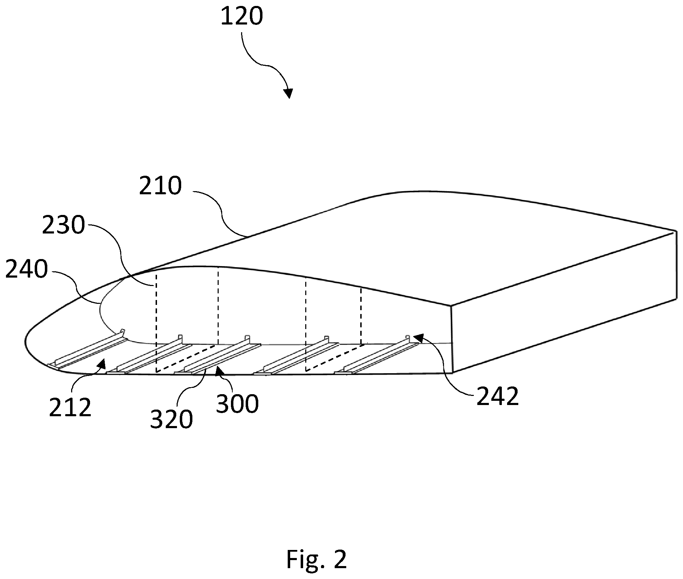

A cross section through one of the wings 120 of the aircraft 100 is shown in Figure 2. The wing 120 is an aircraft structural assembly and comprises a skin section 210 defining its outer surface, spars 230 (shown in dashed lines in Figure 2) and ribs 240 (only one of which is visible in Figure 2) supporting the skin section 210, and a series of stringers 300. The rib 240 has openings 242 through which the stringers 300 pass. The stringers 300 are affixed to the inner surface 212 of the skin section 210 at their respective flanges 320 (described below). This is achievable by mechanical joining, for example by mechanical fasteners such as rivets or bolts (not shown). Alternatively, other joining methods such as adhesives or welding can be used. A stringer is an example of an aircraft structural component in accordance with the invention.

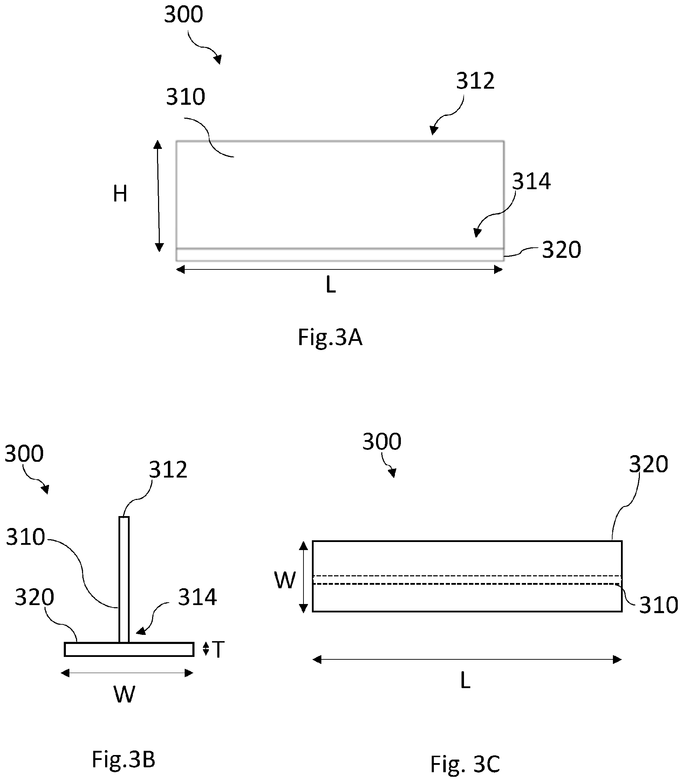

An aircraft structural component according to an embodiment of the present invention is shown in Figure 3A. In this example embodiment, the component one of the stringers 300 shown in Figure 2. In other embodiments, the aircraft structural component may be another component, for example an elongate component, such as a spar. The stringer 300 is provided in the wing 120, to provide structural support to wing 120 against the loads the wing 120 is exposed to both on the ground and in flight.

The stringer 300 comprises a web 310 and a flange 320 at a first end of the web 310. The web 310 extends perpendicularly from the flange 320 in a first direction (which may be a direction corresponding to the height H of the web 310) from the first end 314 to a second end 312, the second end 312 being distal from the flange 320. The web has a height H extending from the first end 314 to the second end 312. The flange 320 has a length L and a thickness T perpendicular to the length L. The stringer 300 is depicted in a cross-sectional view in Figure 3B, where it is shown that the flange 320 also has a width W. The width W is perpendicular to both the thickness T and the length L, and is also perpendicular to the web 310.

A further view of the stringer 300 is shown in Figure 3C, viewed top-down in a direction of the thickness T of the flange 320, with the web 310 shown in dashed lines. In this embodiment, the web 310 and the flange 320 provide the stringer 300 with a upside down 'T'-shape cross section, as best understood from Figure 3B. Other arrangements are possible, and may be desirable for different structural applications. In other examples, the cross section may, for example, have an 'L'-shape or an 'Ω'-shape.

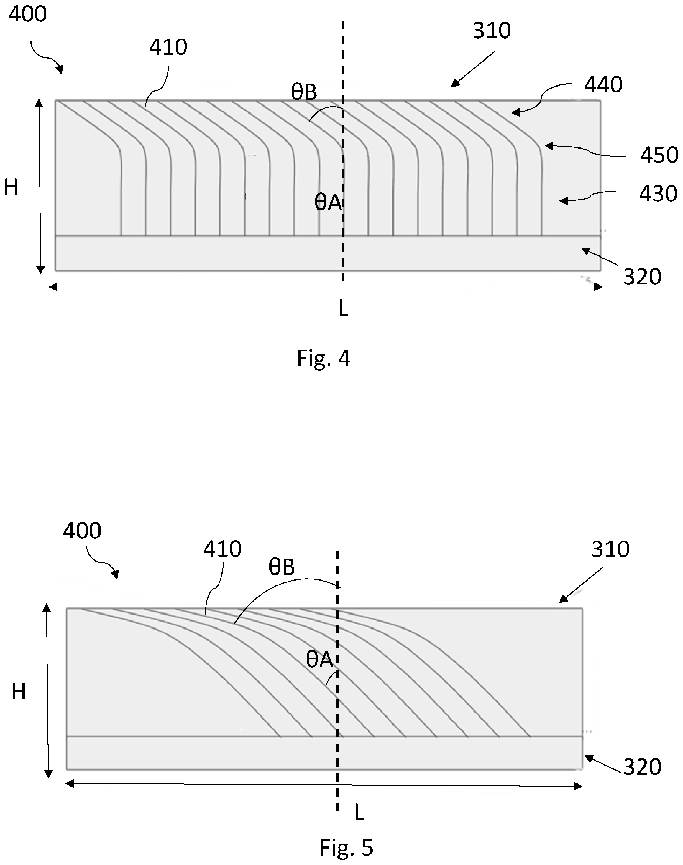

The web 310 of the stringer 300 may comprise a plurality of layers. Each layer has a plurality of fibres. Figures 4 and 5 show a side view of an example first layer 400 of the plurality of layers. The layer 400 has a first portion of fibres 430 which are orientated at a first angle θA relative to the first direction (shown as a dashed line) and a second portion of fibres 440 orientated at a second angle θB relative to the first direction. The first portion of the layer 430 is closer to the flange 320 than the second portion 440 of the layer and the second angle θB is greater than the first angle θA. The first portion of the layer 430 may be adjacent to the flange. The second portion of the layer 430 may be adjacent the second end 312. A transition region 450 connects the first and second portions, in this example, the fibres 410 gradually curve in transition region 450 to transition between the two different orientation angles.

The first direction is in a height H direction of the web. The fibre orientations are configured such that the second angle θB is greater than the first angle θA, providing varying stiffness along the web in the direction of the height of the web. In the example shown in Figure 4, θA is approximately 0 degrees and θB is approximately 45 degrees relative to the height H. Figure 5 shows an alternative configuration where θA is approximately 45 degrees and θB is approximately 75 degrees.

The transition region 450 features a curved fibre path with a radius of curvature of approximately 25mm. Other radius values between 2mm and 100mm are also envisaged in various embodiments.

In alternative examples, the angles θA and θB may have different magnitudes. For example, each of angle θA and angle θB may have any magnitude between 0° and 90° relative to the stringer height H. In all embodiments θB is greater than θA and the first portion 430 is positioned closer to the flange than the second portion 440.

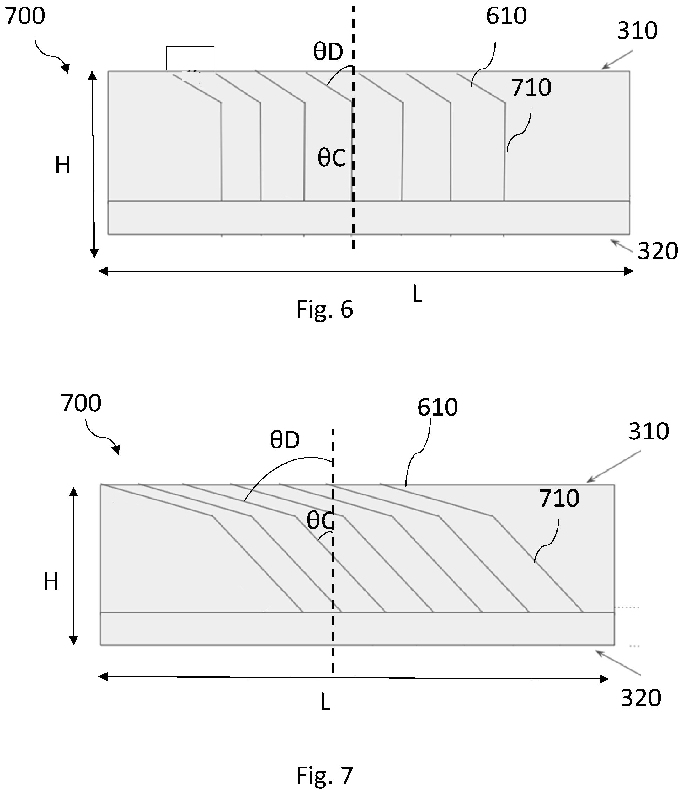

Figures 6 to 9 show alternative embodiments of the stringer 300 in which the fibres are not curved but are arranged in groups of fibres. Each group consists of unidirectional fibres containing fibres arranged side-by-side and aligned parallel to each other, extending in the same direction relative to the length of the stringer 300.

Figures 6 and 7 show a layer 700 that includes a first group of fibres 710 orientated at a first angle θC relative to the height H of the stringer 300 and a second group of fibres 610 orientated at a second angle θD relative to the height H of the stringer 300. The first group of fibres 710 and the second group of fibres 610 may overlie one another at their adjacent edges, creating a region of overlap that provides continuity between the groups while maintaining the distinct orientation angles

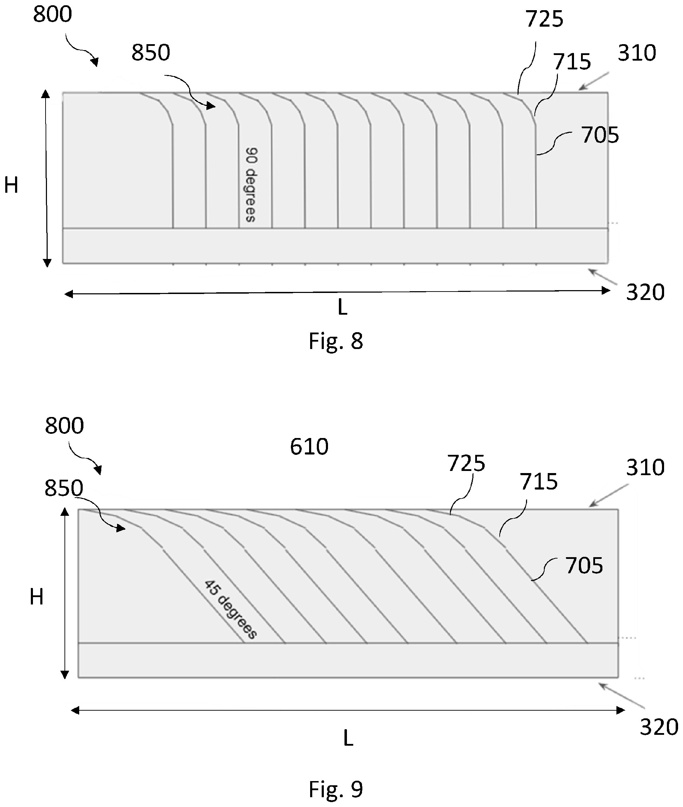

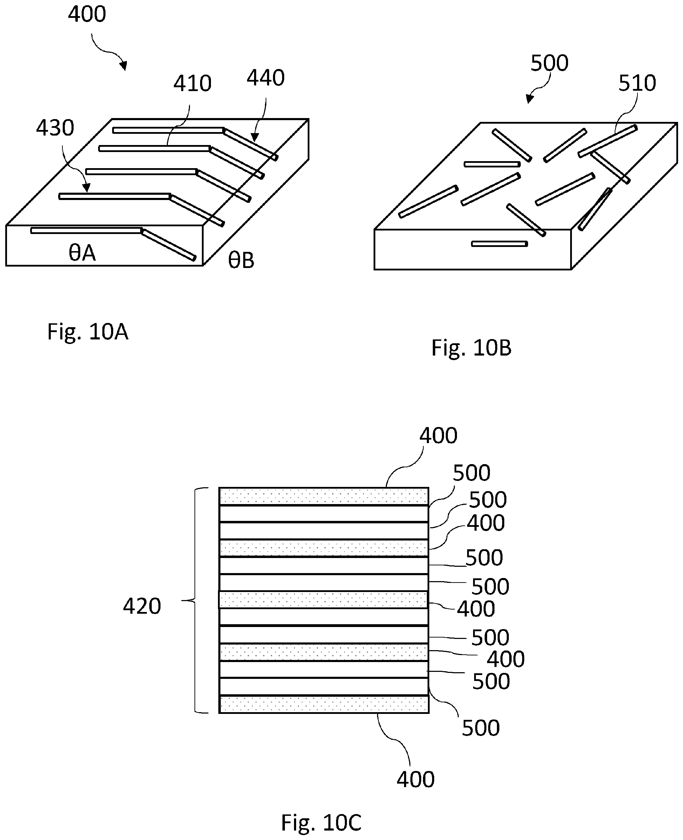

Figures 9 and 10 show an example of a layer 800 comprising multiple fibre groups arranged in sequence. The layer 800 includes a first group of fibres 705, a second group of fibres 715 and a third group of fibres 725. The layer 800 includes a transition region 850, which contains the end portion of the first group 705, the entire second group of fibres 715, and the beginning portion of the third group 725.

In the transition region 850, there is an incremental step change between the angle of the orientation of the fibres relative to the length of the stringer 300. the second group has an angle of orientation of θF and the third group has an angle of orientation of θG. The angle of orientation may decrease by approximately 15 degrees with each successive group, creating a gradual transition from one orientation to another across the length of the stringer.

This stepped arrangement provides an alternative approach to the curved fibre embodiment described above. The incremental changes in fibre orientation allow for a controlled variation in mechanical properties along the length of the stringer. Any number of groups are envisaged with a range of incremental changes between adjacent groups.

The web 310 may contain a plurality of layers 700 and/or 800, the layers 700, 800 may be arranged so that regions of overlap between fibre groups are staggered between successive layers 700, 800. Alternatively, the first group of fibres 710, 705 and the second group of fibres 610, 715 may abut one another without any region of overlap. The locations of the transition regions may be staggered between successive layers 700, 800 of the web 310, to avoid alignment of potential lines of weakness through the web 310.

The stringer 300 is made of a carbon fibre composite material, in this embodiment. Other materials from which the stringer 300 of other embodiments could be made include, for example, other fibre composite materials such as glass fibre, or other composite materials. Composite materials are employed for aircraft components as they are lightweight and have favourable mechanical properties, such as strength and stiffness.

Composite materials, such as carbon fibre composite materials or glass fibre composite materials, may be formed from layers stacked to form laminate structure. The web 310 may include such a laminate structure, for example including both continuous fibre layers 400, as described above, and chopped fibre layers 500, which are described in detail below.

Figure 10A illustrates an example continuous fibre layer 400 as described above. A second example layer of composite material is shown in Figure 10B, and is a chopped-strand layer 500. The chopped-strand layer 500 comprises carbon fibres 510 that are relatively shorter than fibres 410 in the continuous-fibre layer 400. Each of the fibres 510 is 10mm to 100mm long in this example. The fibres 510 are arranged within a plane of the layer 500 but are aligned in random directions relative to each other, or at least in a plurality of directions. Thus, a single chopped-strand layer 500 has approximately equal strength in all directions within the plane of the chopped-strand layer 500.

In this embodiment, the web 310 is made up of a mixed layup 420 that comprises plural ones of each of the continuous-fibre layer 400 and the chopped-strand layer 500, as shown in Figure 10C. The mixed layup 420 comprises one or two of the continuous-fibre layers 400 between pairs of the chopped strand layers 500, and terminates at each of two opposite faces of the mixed layup 420 with respective ones of the continuous-fibre layer 400. A total number of the layers in the mixed layup 420 is 13.

In other embodiments, fewer or more of the continuous-fibre layers 400 and/or the chopped-strand layers 500 may be provided in the mixed layup, and/or different ratios of the continuous-fibre layers 400 and the chopped-strand layers 500 may be present. Additionally or alternatively, the mixed layup 420 may include one or more layers as described above in relation to figures 6 to 9.

Preferably, at least half of the total number of layers are continuous-fibre layers 400. In some examples, different stacking sequences of the continuous-fibre layers 400 and the chopped-strand layers 500 are possible. Preferably, pairs of immediately adjacent ones of the chopped-strand layers 500 are separated by at least one of the continuous-fibre layers 400.

The stringer 300 in this embodiment comprises the mixed layup 420 such that the fibres 410 of the continuous fibre layers 400 align with the height H of the web 310 of the stringer 300, and the layers 400 and 500 of the mixed layup 420 are stacked in the direction of the thickness of the web 310. In other embodiments of an aircraft structural component according to the invention, other mixed layups 420 are possible, as well as conventional continuous-fibre layer only layups, or other layered composite materials or structures.

In some embodiments, at least eight percent of the total number of fibres of the web 310 are orientated in each of four directions, the four directions being: first and second mutually perpendicular directions lying in a plane, and third and fourth mutually perpendicular directions lying in the plane and orientated at 45 degrees to the first and second directions.

Figure 9 shows an example method according to the invention. The method 1000 is a method of fabricating an aircraft structural component. In this example, the method 1000 is a method of fabricating the stringer 300 described above.

The method 1000 comprises providing 1010 the flange 320.

The method 1000 further comprises providing 1020 the web 310.

The providing 1010 the flange and the providing 1020 the web comprise forming the respective flange and web from the mixed layup 420. In this embodiment, the providing 1010 the web and the providing 1020 the flange happen concurrently. In other embodiments, the providing 1010 the flange may be preceded by, or followed by, the providing 1020 the web.

The providing 1020 the web 310 includes the web 310 extending from the flange 320 in a first direction to a distal end and distal end being distal from the flange. The web 320 includes at least a first layer of the plurality of layers that has a first portion of fibres orientated at a first angle relative to the first direction, and a second portion of fibres orientated at a second angle relative to the first direction. The first portion of the layer is closer to the flange than the second portion of the layer and the second angle is greater than the first angle.

The method 1000 may use rapid tow shearing technology to direct the orientation of the fibres such that the first portion of the fibres adjacent to the flange 320 are orientated at a first angle relative to the first direction and the second portion of fibres adjacent to the distal end of the web 310 are orientated at a second angle relative to the first direction such that the second angle is greater than the first angle. Rapid tow shearing may enable the manufacture of the curved fibres 410 described above.

Alternatively, the method 1000 may use rapid tow steering technology to direct the orientation of the fibres.

The method 1000 of this embodiment comprises infusing 1030 the layer in the web 310 and the flange 320 of the stringer 300 with a resin. The infusing 1030 the component with resin may be omitted in some embodiments, such as if pre-preg fibres are used instead of dry fibres. When such a resin infusion process is performed, it may be followed by a resin curing process.

It is to be noted that the term "or" as used herein is to be interpreted to mean "and/or", unless expressly stated otherwise.

## Claims

1. An aircraft structural component for an aircraft, the aircraft structural component comprising a web and a flange, the web extending from the flange in a first direction to a distal end, the distal end being distal from the flange,
wherein the web comprises a plurality of layers, each layer having a plurality of fibres,
wherein at least a first layer of the plurality of layers has a first portion of fibres orientated at a first angle relative to the first direction, and a second portion of fibres orientated at a second angle relative to the first direction,
wherein the first portion of the layer is closer to the flange than the second portion of the layer and the second angle is greater than the first angle.

2. The aircraft structural component according to claim 1, wherein one or more of:
the second portion is adjacent to the distal end of the web; and
the first portion is adjacent to the flange.

3. The aircraft structural component according to any one of the preceding claims, wherein the fibres are continuous fibres orientated parallel to one another.

4. The aircraft structural component according to any one of the preceding claims, comprising a transition between the first and second portions, the transition being located at a distance from the distal end equal to between five to ten times, inclusive, of a thickness of the web, and
optionally, wherein the thickness of the web is 5mm to 25mm.

5. The aircraft structural component according to claim 4, wherein the transition comprises a portion of the web in which the fibres are curved, and
optionally, wherein a radius of curvature between the first portion of the fibres and the second portion of the fibres is between 2mm and 100mm

6. The aircraft structural component according to any one of claims 1 to 4, wherein the first portion comprises a first group of fibres orientated parallel to one another, and the second portion comprises a second group of fibres orientated parallel to one another.

7. The aircraft structural component according to claim 6 when dependent on claim 4, wherein the transition comprises an incremental step change between the first angle and the second angle, and
optionally, wherein the incremental step change in angle between the first portion of the fibres and the second portion is between 5 and 45 degrees.

8. The aircraft structural component according to any one of the preceding claims, wherein the first angle is approximately 0 degrees, and
optionally, wherein the second angle is approximately 45 degrees.

9. The aircraft structural component according to any one of claims 1 to 7, wherein the first angle is approximately 45 degrees, and
optionally, wherein the second angle is approximately 75 degrees.

10. The aircraft structural component according to any one of the preceding claims, wherein at least one of:
the fibres comprise carbon fibres; and
the aircraft structural component is a stringer.

11. The aircraft structural component according to any one of the preceding claims, wherein the web comprises a total number of fibres, and wherein at least eight percent of the total number of fibres are orientated in each of four directions, the four directions being: first and second mutually perpendicular directions lying in a plane, and third and fourth mutually perpendicular directions lying in the plane and orientated at 45 degrees to the first and second directions.

12. An aircraft structural assembly, comprising:
the aircraft structural component according to any one of claims 1 to 11;
and a skin section affixed to the flange of the aircraft structural component.

13. An aircraft comprising the aircraft structural assembly according to claim 12.

14. A method of fabricating an aircraft structural component for an aircraft, the method comprising:
providing a flange; and
providing a web extending from the flange in a first direction to a distal end, the distal end being distal from the flange,
wherein the web comprises a plurality of layers, each layer having a plurality of fibres,
wherein at least a first layer of the plurality of layers has a first portion of fibres orientated at a first angle relative to the first direction, and a second portion of fibres orientated at a second angle relative to the first direction web,
wherein the first portion of the layer is closer to the flange than the second portion of the layer and the second angle is greater than the first angle.

15. The method according to claim 14, wherein the method comprises:
using rapid tow shearing technology to direct the orientation of the fibres, or
using rapid tow steering technology to direct the orientation of the fibres, and/or
wherein the method comprises infusing the layers with a resin.
